# EUROPÄISCHE PATENTANMELDUNG

(11) **EP 4 101 793 A1**
(43) Veröffentlichungstag der Anmeldung: **14.12.2022**
(21) Anmeldenummer: 22177603.2
(22) Anmeldetag: 07.06.2022
(51) Int. Cl.: B65G 17/44, B65G 17/46, B65G 37/00, B65G 15/42, C03C 17/22

(54) **FÖRDERRIEMEN UND FÖRDERER ZUM LIEGENDTRANSPORT VON GLASBEHÄLTERN**

(30) Priorität: 09.06.2021 DE 102021114878
(71) Anmelder: AMBEG Dr. J. Dichter GmbH, 10829 Berlin (DE)
(72) Erfinder: LANGER, Matthias, 12355 Berlin (DE)
(74) Vertreter: Grünecker Patent- und Rechtsanwälte PartG mbB

(57) **Zusammenfassung**

Die Erfindung befasst sich mit dem Liegendtransport von Glasbehältern (8), insbesondere Injektionsfläschchen, Spritzen, Karpulen, Ampullen oder Phiolen, in Glasbearbeitungslinien. Um eine exakte Position der Glasbehälter (8) während des Transports zu ermöglichen, weist ein Förderriemen (18) einen Treibriemen (26) und Behälterstützen (28) auf. Die Behälterstützen (28) stützen den Glasbehälter ab und sind am Treibriemen befestigt. Im Gegensatz zu den üblicherweise verwendeten Rollenketten dämpft der Treibriemen (26) Vibrationen. Da der Treibriemen (26) monolithisch aufgebaut ist, gibt es keine Fertigungs- und Montagetoleranzen, die wie bei den Rollenketten zum einen ein Spiel verursachen und zum anderen sich aufsummieren und zu erheblichen Abweichungen der Positionen der Glasbehälter (8) führen.

## Beschreibung

Die Erfindung betrifft den Liegendtransport von Glasbehältern, insbesondere von Injektionsfläschchen, Spritzen, Karpulen, Ampullen und Phiolen. Ein Liegendtransport solcher Glasbehälter, also ein Transport mit horizontal ausgerichteter Behälterachse, findet insbesondere in Glasbearbeitungslinien statt, in denen die Glasbehälter bearbeitet und einer Qualitätskontrolle unterzogen werden, indem sie beispielsweise bedruckt und/oder vermessen werden. Für diese Aufgaben ist eine exakte Positionierung der Glasbehälter während des Liegendtransports notwendig. Ist die Positionierung eines Glasbehälters während des Liegendtransports ungenau, so kann der Glasbehälter unter Umständen nicht mehr exakt vermessen und/oder bearbeitet werden.

Folglich liegt der Erfindung die Aufgabe zugrunde, eine exakte Positionierung der Glasbehälter während des Liegendtransports zu gewährleisten.

Erfindungsgemäß wird diese Aufgabe gelöst durch einen Förderriemen zum Liegendtransport von Glasbehältern, insbesondere von Injektionsfläschchen, Spritzen, Karpulen, Ampullen und Phiolen, mit einem Treibriemen und mit Behälterstützen zur Abstützung der Glasbehälter, wobei die Behälterstützen am Treibriemen befestigt sind.

Der erfindungsgemäße Förderriemen hat gegenüber den Rollenketten, die für den Liegendtransport von Glasbehältern benutzt werden, eine Reihe von Vorteilen. Beispielsweise dämpft ein Treibriemen Vibrationen besser als eine Rollenkette, so dass der erfindungsgemäße Förderriemen ruhiger läuft und die Glasbehälter aus ihrer Transportposition nicht durch Rüttelbewegungen abwandern können.

Ein weiterer Vorteil der erfindungsgemäßen Lösung besteht darin, dass der Treibriemen eine monolithische Ausgestaltung hat, also ein einziges stofflich verbundenes, integrales Bauteil ist. Eine Rollenkette ist im Gegensatz dazu aus einer Vielzahl von zusammengesetzten Einzelteilen aufgebaut, nämlich den Kettenbolzen, Innen- und Außenlaschen sowie den Rollen auf den Kettenbolzen. Die Montage- und Fertigungstoleranzen dieser Bauteile addieren sich über die zum Teil erheblichen Längen der Rollenketten, so dass bei Rollenketten mit Längen von zum Teil deutlich über drei oder vier Meter, wie sie in Glasbearbeitungslinien üblich sind, mit Abweichungen in der Transportposition der Glasbehälter von mehreren Millimetern gerechnet werden muss. Diese Abweichungen erhöhen sich zudem bei Rollenketten im Laufe der Zeit, da durch den Verschleiß Material abgetragen wird und sich somit die Toleranzen, mit denen die einzelnen Bestandteile der Rollenketten zusammengefügt sind, erhöhen. Der Treibriemen weist aufgrund seiner integralen Struktur diese Nachteile nicht auf. Die Behälterstützen am Treibriemen, die die Glasbehälter, insbesondere deren Umfangsfläche, während des Liegendtransports abstützen, sind daher deutlich exakter positioniert. Schließlich weist der Treibriemen im Gegensatz zu einer Rollenkette kein internes Spiel auf.

Die erfindungsgemäße Lösung kann durch die folgenden, jeweils für sich vorteilhaften und beliebig miteinander kombinierbaren Merkmale weiter verbessert werden.

Die Glasbehälter, für die der Förderriemen, insbesondere dessen Behälterstützen, ausgestaltet ist, können beispielsweise eine Länge bzw. Höhe von höchstens 20 cm und mehr und/oder einen Durchmesser von höchstens 6 cm aufweisen. Beispielsweise handelt es sich bei den Glasbehältern um Behälter für medizinische Produkte, wie beispielsweise Impfstoffe oder Medikamente, für kosmetische Produkte und/oder für Lebensmittel.

Für einen stabileren Lauf des Förderriemens ohne Verkippen ist es von Vorteil, wenn der Treibriemen breiter ist als hoch. Die Breite wird hierbei in horizontaler Richtung des Treibriemens quer zu dessen Längsrichtung und die Höhe in vertikaler Richtung gemessen. Insbesondere ist das Verhältnis Breite : Höhe größer als 5:1; es kann in einer Ausgestaltung bis 15:1 betragen. Ein Verhältnis von 6:1 bis 10:1 stellt ein optimales Verhältnis zwischen dem Reibwiderstand eines breiten Treibriemens und dessen Stabilität gegenüber einer Torsionsbelastung dar.

Die Länge des Förderriemens beträgt in einer Ausgestaltung wenigstens 1 und/oder bis zu 12 Meter, z.T. auch mehr. Der Förderriemen ist dabei insbesondere ringförmig geschlossen, also endlos umlaufend. Der Förderriemen kann mit einer Trennstelle in Form einer Schließe oder einem Schloss versehen sein, an der er nach der Montage geschlossen wird. Die Behälterstützen sind bevorzugt ausgestaltet, Glasbehälter mit deren Längsachse quer zur Transportrichtung abzustützen, wobei die Transportrichtung parallel zur Längsrichtung des Förderriemens verläuft. Die Längsachse eines Glasbehälters verläuft dabei senkrecht zu seiner Bodenfläche. Die Glasbehälter können hierbei auf einem oberen Ende der Behälterstützen aufliegen.

Die Bearbeitung der Glasbehälter erfolgt meist unter hohen Temperaturen. Darum sollten die Behälterstützen wärmefest sein. Gemäß einer Ausgestaltung sind die Behälterstützen aus einem Kunststoff gefertigt, der einen Schmelzpunkt von wenigstens 280 °C aufweist, beispielsweise aus PI Kunststoffen (nicht schmelzbares Hochtemperatur Polyimid).

Gemäß einer weiteren vorteilhaften Ausgestaltung weisen die Behälterstützen eine Basis auf, die starrer als der Treibriemen ist, sich quer über den Treibriemen erstreckt und auf dem Treibriemen insbesondere flächig aufliegt. Insbesondere kann die Basis aus einem metallischen Werkstoff, wie beispielsweise einem Werkstoff enthaltend Aluminium, gefertigt sein. Die Basis kann aber auch aus einem Kunststoff, beispielsweise aus POM, PI Kunststoffen oder Teflon, gefertigt sein. Der Schmelzpunkt des Materials der Basis liegt bevorzugt über 280 °C. Die Behälterstütze ist bevorzugt über die Basis am Treibriemen befestigt. Die Basis kann am Treibriemen insbesondere wiederholt lösbar befestigt, beispielsweise verschraubt sein. Die Basis kann alternativ oder zusätzlich auf dem Treibriemen aufgeclipst, mit ihm vernietet, verschweißt, verlötet oder verklebt sein.

Die Behälterstütze kann einen Behältersitz aufweisen, der sich weg vom Treibriemen nach oben erstreckt und der im Betrieb des Förderriemens einen Glasbehälter bzw. einen Abschnitt des Glasbehälters aufnimmt. Der Behältersitz kann das nach oben weisende Ende der Behälterstütze bilden. Von Vorteil ist es dabei, wenn der Behältersitz selbstzentrierend ausgestaltet ist, sich also unter Schwerkrafteinfluss ein in den Behältersitz gelegter Glasbehälter selbsttätig ausrichtet.

Der Behältersitz kann beispielsweise im Wesentlichen als V-förmige, nach oben offene Aussparung ausgestaltet sein. Zumindest im Arbeitstrum des Förderriemens kann sich der Behältersitz in vertikaler Richtung weiten. Hierbei nimmt die lichte Weite der Aussparung in Richtung weg von der Basis zu. Der Behältersitz kann beispielsweise an seinem oberen Ende mit schräg gegenüber der Vertikalen ausgerichteten, zum Treibriemen hin aufeinander zu verlaufenden Sitzflächen versehen sein. Die Sitzflächen, auf denen ein Glasbehälter während des Transports aufliegt, müssen nicht geradlinig sein, sondern können auch gekrümmt sein.

Vorzugsweise verlaufen die Sitzflächen schräg gegenüber der Vertikalen und geneigt gegenüber der Längsrichtung des Förderriemens. Um einen Transport der Glasbehälter mit quer zur Transportrichtung ausgerichteter Längsachse zu ermöglichen, können die Sitzflächen in und entgegen der Längsrichtung bzw. der Laufrichtung des Treibriemens weisen.

Der Behältersitz kann integral mit der Basis ausgestaltet sein oder als ein separates Bauteil, das mit der Basis bevorzugt wiederholt lösbar verbunden, beispielsweise verschraubt ist. Eine wiederholt lösbare Verbindung erlaubt einen einfachen Austausch des Behältersitzes bei Beschädigung oder Verschleiß. Der Behältersitz kann seitlich neben dem Treibriemen liegen. Er kann insbesondere eine Seitenfläche des Treibriemens überlappen. In einer Ausgestaltung ist der Behältersitz laschenförmig, also aus einem Flachmaterial gefertigt.

Der Behältersitz kann aus Kunststoff, insbesondere einem Kunststoff mit einem Schmelzpunkt von über 280 °C gefertigt sein. Die Verwendung eines solchen Kunststoffes hat den Vorteil, dass er einen schonenderen, stoß- und vibrationsdämpfenden Transport des Glasbehälters ermöglicht und gleichzeitig als Wärmeisolation dient: Werden die Glasbehälter im heißen oder warmen Zustand transportiert, wird eine Wärmeleitung hin zum Treibriemen auf diese Weise verringert.

Der Behältersitz kann in einer weiteren vorteilhaften Ausgestaltung an seinem vom Förderriemen weg weisenden Ende mit einer insbesondere wiederholt austauschbaren Behälterauflage aus Kunststoff versehen sein. Dies erlaubt ein Austauschen nur der Behälterauflage bei Verschleiß. Die Behälterauflage kann dabei das nach oben weisende Ende eines Behältersitzes und die Sitzflächen ausbilden. Der Schmelzpunkt des Materials der Behälterauflage liegt bevorzugt über 280 °C. Wird eine Behälterauflage aus Kunststoff verwendet, so kann der Behältersitz aus einem Metall, insbesondere Stahl, gefertigt sein.

Der Behältersitz kann an einer seitlichen Kante des Förderriemens angeordnet sein. Insbesondere kann der Behältersitz an einer Stirnfläche der Basis befestigt sein, beispielsweise wenn die Basis quaderförmig ausgestaltet ist. Bevorzugt ist die Stirnfläche senkrecht zur Längsrichtung des Treibriemens. In Längsrichtung des Treibriemens kann die Basis so breit wie der Behältersitz sein, um eine möglichst großflächige Anlage zwischen Basis und Behältersitz zu ermöglichen.

Insgesamt kann eine Behälterstütze in einer Projektion in Längsrichtung des Treibriemens eine im Wesentlichen L-förmige Kontur aufweisen, wobei der längere Schenkel der L-Form die Basis und der kürzere Schenkel den Behältersitz bildet. Die beiden Schenkel können insbesondere im Wesentlichen rechtwinklig zueinander ausgerichtet sein. Die Materialstärke der Basis ist bevorzugt größer als die Materialstärke des Behältersitzes. Die Basis kann den Treibriemen an wenigstens einer Seite überragen.

Die Behälterstützen, insbesondere deren Basen, können jeweils einen Sockel aufweisen, der auf dem Treibriemen aufliegt. Der Sockel ist bevorzugt monolithisch mit der jeweiligen Basis ausgestaltet, bildet also zusammen mit der Basis einen stofflich verbundenen Körper. Die Breite des Sockels in Längsrichtung des Treibriemens ist bevorzugt kleiner als die Breite der Basis. Folglich liegt die Basis nicht über ihre volle Breite auf dem Treibriemen auf, was eine Umlenkung des Treibriemens an Umlenkstellen, wie beispielsweise Rollen, Rädern oder Gleitschuhen, vereinfacht und die mechanische Belastung des Treibriemens bei der Umlenkung verringert.

Der Treibriemen kann ein Flachriemen, Keilriemen oder Zahnriemen sein. Ist der Treibriemen ein Zahnriemen, so weist er eine Verzahnung bevorzugt auf der dem Behälterstützen gegenüberliegenden Seite des Treibriemens auf. In einem solchen Fall entspricht die Breite des Sockels in Längsrichtung des Treibriemens höchstens der Teilung der Verzahnung, weiter vorteilhaft jedoch der Breite eines Zahnfußes der Verzahnung bzw. der Hälfte der Teilung. Hierbei, wie auch im übrigen Text bei anderen Maßangaben, gelten Abweichungen von ±15 % noch als einander entsprechend. Diese Bemaßungen stellen sicher, dass der Zahnriemen mit dem daran befestigten Behälterstützen ohne nennenswerten zusätzlichen Verschleiß umgelenkt werden kann.

Von Vorteil ist auch, wenn der Sockel mit einem Zahnfuß fluchtet, also unmittelbar über einem Zahnfuß auf dessen gegenüberliegenden Seite des Treibriemens angeordnet ist. Bei dieser Ausgestaltung stabilisiert das zusätzliche Material des Zahnes zusätzlich den Sockel.

Der Sockel kann sich unterbrochen oder ununterbrochen quer insbesondere über die gesamte Breite des Treibriemens erstrecken.

Die Erfindung betrifft auch einen Förderer für den Liegendtransport von Glasbehältern, der einen Förderriemen in einer der oben beschriebenen Ausgestaltungen aufweist. Der Treibriemen weist hierbei ein Arbeitstrum auf, das auf einer Stützschiene des Förderers gleitend abgestützt ist. Das Arbeitstrum bezeichnet dabei den Bereich des Förderriemens, in dem die Glasbehälter transportiert werden. Im Leertrum läuft der Förderriemen zurück, ohne Glasbehälter zu transportieren. Der Förderriemen und die Stützschiene können mit zueinander komplementären Formschlusselementen versehen sein, durch die eine Bewegung des Förderriemens quer zur Stützschiene blockiert und der Förderriemen in seiner Längsrichtung verschieblich geführt ist. Insbesondere kann sich ein solches Formschlusselement, beispielsweise in Form eines sich in Längsrichtung erstreckenden Vorsprungs oder einer sich in Längsrichtung erstreckenden Ausnehmung am Treibriemen befinden. Um wenig Bauraum zu beanspruchen und eine leichte Zugänglichkeit des Arbeitstrums zu gewährleisten, befindet sich das Leertrum bevorzugt unterhalb des Arbeitstrums.

Die Formschlusselemente können auch seitliche Führungswände der Stützschiene umfassen, an denen die Seitenwände des Treibriemens gleitend anliegen. Insbesondere kann der Förderriemen in eine Vertiefung oder Mulde der Stützschiene laufen, wobei die Mulde die seitlichen Führungswände ausbildet.

Der Förderer kann gemäß einer weiteren Ausgestaltung ausgebildet sein, die Glasbehälter in Transportrichtung insbesondere einreihig hintereinander liegend abzustützen. Die Glasbehälter werden auf diese Weise einzeln durch die verschiedenen Bearbeitungs- und/oder Vermessungsschritte geschleust. Dies wird in einer Ausgestaltung dadurch erreicht, dass quer zur Längsrichtung des Förderriemens jeweils nur ein Behältersitz vorhanden ist. Unabhängig davon sind die Behältersitze bevorzugt in Längsrichtung des Förderriemens fluchtend hintereinander angeordnet. In einer Variante des Förderriemens kann dieser jedoch auch wenigstens ein Paar von Behältersitzen quer zur Längsrichtung miteinander fluchtend und voneinander beabstandet aufweisen.

In einer weiteren vorteilhaften Ausgestaltung kann der Förderer eine Abschirmleiste aufweisen, die oberhalb des Arbeitstrums angeordnet ist und das Arbeitstrum abdeckt. Die Abschirmleiste erstreckt sich dabei vorteilhaft oberhalb der Basen der Behälterstützen, bevorzugt unterhalb der Behältersitze. Im Betrieb des Förderers ist die Abschirmleiste bevorzugt zwischen einem im Behältersitz abgestützten Glasbehälter und der Basis angeordnet. Die Abschirmleiste dient in erster Linie dazu, eine vom Glasbehälter ausgehende Wärmestrahlung zu blockieren und somit ein Aufheizen des Treibriemens zu verhindern. Ein Nebeneffekt der Abschirmleiste ist, dass sie auch vor mechanischer Verschmutzung oder Beschädigung schützt, indem sie beispielsweise herabfallende Teile vom Treibriemen fernhält. Dieser Schutz kann dadurch verbessert werden, dass die Abschirmleiste und die Stützschiene das Arbeitstrum wenigstens abschnittsweise einhausen, wobei die Behälterstützen, insbesondere die Behälterauflagen, aus einer Lücke zwischen der Abschirmleiste und der Stützschiene ragen.

Der Förderer kann in einer Ausgestaltung eine Ausrichtleiste aufweisen, die entlang eines Arbeitstrums des Förderriemens seitlich neben dem Behältersitz, insbesondere auf Höhe der Sitzflächen, verläuft. Die Ausrichtleiste ist ausgestaltet, die von den Behältersitzen aufgenommenen Glasbehälter in deren Längsrichtung, also quer zur Längsrichtung des Treibriemens auszurichten, indem sie einen Anschlag bzw. Führung für beispielsweise den Boden der Glasbehälter bildet.

Der Förderer kann in einer weiteren Ausgestaltung eine Abweisleiste aufweisen, die oberhalb eines Leertrums des Förderriemens angeordnet ist. Insbesondere deckt die Abweisleiste das Leertrum wenigstens abschnittsweise ab. Befindet sich das Leertrum unterhalb des Arbeitstrums, ist es sinnvoll, wenn sich die Abweisleiste zwischen Leertrum und Arbeitstrum erstreckt. Die Abweisleiste verhindert, dass herabfallende Verschmutzungen oder Glasbehälter auf dem Leertrum landen können und mit diesem weitertransportiert werden.

Die Abweisleiste weist bevorzugt eine gegenüber der Vertikalen und quer zur Längsrichtung des Treibriemens geneigte Abweisfläche auf. Die Abweisfläche kann den Förderriemen seitlich überragen, so dass sichergestellt ist, dass auch leicht schräg fallendes Material nicht auf dem Leertrum landet. Bevorzugt deckt die Abweisleiste in Querrichtung des Treibriemens mehr als die Hälfte, weiter bevorzugt mehr als dreiviertel der Breite des Leertrums ab.

Schließlich betrifft die Erfindung noch eine Glasbearbeitungslinie zum Transport und/oder zur Bearbeitung und/oder zur Vermessung von Glasbehältern, wobei die Glasbearbeitungslinie zwei Förderriemen aufweist, die jeweils wie oben beschrieben ausgestaltet sind, oder zwei Förderer in einer oben beschriebenen Ausgestaltung. Die Förderriemen sind dabei parallel und beabstandet voneinander angeordnet und ausgestaltet, einen Glasbehälter auf einer Behälterstütze des einen Förderriemens und auf einer quer zur Förderrichtung gegenüberliegenden Behälterstütze des anderen Förderriemens aufliegend zu transportieren. Die Glasbehälter erstrecken sich während des Transports von dem einen Förderriemen zum anderen Förderriemen. Die Glasbearbeitungslinie kann eine Einrichtung zum Bearbeiten und/oder Vermessen der Glasbehälter in einem Spalt zwischen den Förderern aufweisen.

Die Einrichtung zum Transport und/oder zur Bearbeitung und/oder zur Vermessung der Glasbehälter kann beispielsweise einen Ausheber umfassen, der ausgestaltet ist, automatisch einen Glasbehälter aus den Behälterstützen bzw. Behälterauflagen zu heben.

Die Förderer sind zueinander in unterschiedlichen Abständen anordenbar bzw. einstellbar in der Glasbearbeitungslinie angeordnet. Auf diese Weise kann die Glasbearbeitungslinie umgerüstet werden, um verschieden große, insbesondere verschieden lange Glasbehälter zu bearbeiten und/oder zu vermessen.

Die Behältersitze können an den zueinander weisenden Seiten des Treibriemens bzw. Basen am Spalt zwischen dem Förderriemen angrenzend angeordnet sein.

Im Folgenden ist die Erfindung anhand eines Ausführungsbeispiels mit Bezug auf die beigefügten Zeichnungen exemplarisch näher erläutert. Dabei werden für Elemente, die einander hinsichtlich Aufbau und/oder Funktion entsprechen, dieselben Bezugszeichen verwendet.

Nach Maßgabe der obigen allgemeinen Beschreibung können einzelne Merkmale des nachstehenden Ausführungsbeispiels weggelassen werden, wenn es in einem bestimmten Anwendungsfall nicht auf den mit diesen Merkmalen verknüpften technischen Effekt ankommen sollte. Umgekehrt können auch Merkmale, die oben beschrieben sind, aber in dem nachstehenden Ausführungsbeispiel nicht enthalten sind, hinzugefügt werden, wenn es bei einer bestimmten Anwendung auf den mit diesem Merkmal verknüpften technischen Effekt ankommen sollte.

Es zeigen:
- Fig. 1: eine schematische Schnittdarstellung eines Teils einer Glasbearbeitungslinie;
- Fig. 2: eine schematische Perspektivdarstellung zweier Förderer mit Förderriemen;
- Fig. 3: eine schematische Perspektivdarstellung eines Förderriemens;
- Fig. 4: eine schematische Schnittdarstellung eines weiteren Förderriemens.

Zunächst wird der Aufbau eines Förderers 1, wie er in einer hier nur schematisch dargestellten Glasbearbeitungslinie 2 zum Einsatz kommt, beschrieben. Die Glasbearbeitungslinie 2 kann dabei zwei parallel ausgerichtete Förderer 1 aufweisen, zwischen denen sich eine Lücke bzw. ein Spalt 4 befindet. In dem Spalt 4 kann eine Einrichtung 6 zur Bearbeitung und/oder Vermessung eines Glasbehälters 8 angeordnet sein, der vom Förderer 1 bzw. den Förderern 1 transportiert wird. Bei der Einrichtung 6 kann es sich um eine Einrichtung zur Bewertung der Güte wie beispielsweise der Oberfläche und Qualität des Glasbehälters 8, um eine Einrichtung zum Bedrucken des Glasbehälters 8, um eine Einrichtung zur Maßbestimmung und/oder einen Ausheber, der einen Glasbehälter 8 von den Förderern 1 abhebt, handeln. Im Spalt 4 können mehrere solche Einrichtungen hintereinander angeordnet sein.

Der Glasbehälter 8 ist ein Glasbehälter mit einem kleinen Durchmesser 10, beispielsweise einem Durchmesser 10 von weniger als 5 cm. Eine Länge 12 des Glasbehälters 8 beträgt höchstens 20 cm. Der Glasbehälter 8 wird liegend transportiert, die Längsachse 14 liegt folglich waagerecht. Die Längsachse 14 verläuft dabei senkrecht zu einer Bodenfläche 16 des Glasbehälters. Der Glasbehälter 8 muss jedoch nicht notwendig eine Bodenfläche aufweisen, die Standfestigkeit gewährt. Der Glasbehälter 8 kann beispielsweise ein Injektionsfläschchen, eine Ampulle, eine Karpule, eine Phiole oder eine Spritze sein. Auch Glasbehälter 8 für kosmetische Produkte oder für Lebensmittel können vom Förderer 1 transportiert werden.

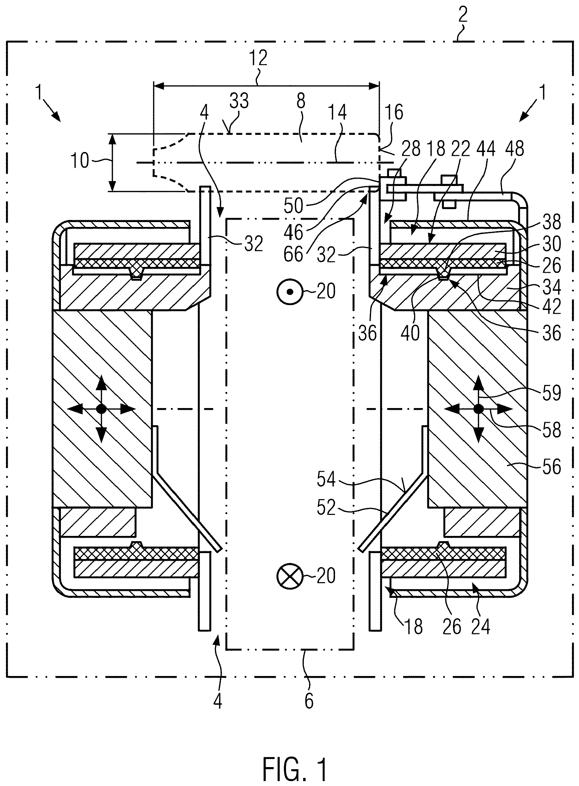

Die beiden Förderer 1 sind im Wesentlichen spiegelsymmetrisch zueinander aufgebaut, so dass im Folgenden nur der in Fig. 1 rechte Förderer 1 beschrieben ist.

Der Förderer 1 weist einen Förderriemen 18 auf, der dem eigentlichen Transport der Glasbehälter 8 dient. Der Förderriemen 18 läuft in einer Transportrichtung 20 um, die senkrecht zur Bildebene der Fig. 1 orientiert ist. Beispielsweise läuft ein Arbeitstrum 22 des Förderriemens 18 aus der Bildebene 20 zum Betrachter und ein rücklaufendes Leertrum 24 vom Betrachter weg in die Bildebene hinein.

Der Förderriemen 18 weist einen Treibriemen 26 und eine Behälterstütze 28 auf. Die Behälterstütze 28 ist am Treibriemen 26 bevorzugt wiederholt lösbar befestigt, beispielsweise verschraubt. Sie weist eine Basis 30 und einen Behältersitz 32 auf.

Der Treibriemen 26 kann, wie in Fig. 1 dargestellt, ein Zahnriemen sein. Anstelle eines Zahnriemens können jedoch auch Flachriemen oder Keilriemen verwendet werden. Gegenüber dem biegsamen oder biegeschlaffen Treibriemen 26 ist die Basis 30 ein Starrkörper. Sie kann aus einem Metall oder festem Kunststoff gefertigt sein.

Der Behältersitz 32 stützt den Glasbehälter 8 bevorzugt an seiner Umfangsfläche 33 ab. Er kann selbstzentrierend ausgestaltet sein, so dass der Glasbehälter 8 unter Wirkung der Schwerkraft eine vorbestimmte Transportposition auf dem Behältersitz 32 selbsttätig einnimmt, wobei die Transportposition bei einem Glasbehälter 8 mit kreisförmigem Querschnitt lediglich vom Durchmesser 10 abhängig sein kann.

Wenigstens im Bereich des Arbeitstrums 22 ist der Förderriemen 18 zumindest abschnittsweise von einer Stützschiene 34 gleitend abgestützt. Der Förderriemen 18 gleitet in Transportrichtung entlang der Stützschiene 34. Der Treibriemen 26 und die Stützschiene 34 können mit zueinander komplementären Formschlusselementen 36 versehen sein, die eine Bewegung des Förderriemens 18 in der Transportrichtung 20, also in seiner Längsrichtung erlauben, aber eine Bewegung des Förderriemens 26 quer dazu blockieren. Die Formschlusselemente 36 können beispielsweise als in Längsrichtung des Förderriemens 18 verlaufender, zueinander rippenförmiger Vorsprung und komplementäre Nut 40 ausgestaltet sein. Bevorzugt befindet sich der Vorsprung 38 am Treibriemen 26, um dessen Querschnittsfläche zu erhöhen und damit die in der Querschnittsfläche wirkenden Zugspannungen zu verringern.

Zusätzlich oder alternativ können die Formschlusselemente 36 eine sich in Transportrichtung 20 längserstreckende Mulde 42 in der Stützschiene 34 umfassen, in der der Treibriemen 26 seitlich geführt läuft.

In Glasbearbeitungslinien 2 können die Glasbehälter 8 während des Transports durch den oder die Förderer 1 je nach Anwendung mitunter eine hohe Temperatur aufweisen. Bevorzugt ist deswegen der Treibriemen 26 aus einem temperaturbeständigen Kunststoff gefertigt, der eine Schmelztemperatur von wenigstens 280 °C aufweist.

Der Förderer 1 kann eine Abschirmleiste 44 aufweisen, die oberhalb des Arbeitstrums 28 verläuft. Die Abschirmleiste 44 befindet sich bevorzugt zwischen einem oberen Ende 46 der Behälterstütze 28 bzw. unterhalb eines in der Behälterstütze 28 bzw. den Behältersitz 32 abgestützten Glasbehälters 8.

Die Abschirmleiste 44 schirmt den Förderriemen 18, insbesondere den Treibriemen 26 von einer vom Glasbehälter 8 ausgehenden Wärmestrahlung ab. Bevorzugt erstreckt sich die Abschirmleiste 44 über den Großteil der Länge des Arbeitstrums 22, insbesondere jedoch über die gesamte Länge des Arbeitstrums 22.

Zusätzlich zur oder anstelle der Abschirmleiste 44 kann zumindest einer der Förderer 1 eine Ausrichtleiste 48 aufweisen. Ist eine Abschirmleiste 44 vorgesehen, so befindet sich die Ausrichtleiste 48 oberhalb der Abschirmleiste 44. Ein Ende 50 der Ausrichtleiste befindet sich auf der Höhe des Bodens 16 eines von dem Förderer 1 oder den Förderern 1 transportierten Glasbehälters 8. Insbesondere gleitet der Boden 16 eines vom Arbeitstrum 28 des Förderriemens 18 transportierten Glasbehälters 8 an der Abschirmleiste 44 entlang, so dass der Glasbehälter 8 durch die Ausrichtleiste 48 in dessen Längsrichtung 14 ausgerichtet wird.

Ferner kann der Förderer 1 eine Abweisleiste 52 aufweisen, die sich bevorzugt zwischen dem Arbeitstrum 22 und dem Leertrum 24 befindet. Eine Abweisfläche 54 der Abweisleiste 52 ist gegenüber der Vertikalen geneigt und erstreckt sich bevorzugt quer zur Längsrichtung des Förderriemens 18 über den Förderriemen 18 hinaus. Die Abweisleiste 52 erstreckt sich in Längsrichtung des Förderriemens 18 bevorzugt über die gesamte Länge des Leertrums, wenigstens jedoch über die Länge des Arbeitstrums bzw. den Bereich, in dem die Glasbehälter 8 auf den Behälterstützen 28 aufliegen. Die Abweisleiste 52 ragt bevorzugt an zumindest einer Seite seitlich, also in Richtung quer zur Transportrichtung 20, über den Förderriemen 18 oder zumindest des Treibriemens 26. Die Abweisleiste 52 verhindert, dass Schmutz oder Gegenstände auf das Leertrum 24 fallen können.

Die Abschirmleiste 44 und die Abweisleiste 52 können aus einem Blechmaterial jeweils einstückig gefertigt sein.

Die Stützschiene 34 kann an einem Maschinengestell 56 befestigt sein, das in Fig. 1 lediglich schematisch dargestellt ist. Das Maschinengestell 56 ist während des Betriebs der Glasbearbeitungslinie 2 ortsfest. Am Maschinengestell 56 können auch die Abschirmleiste 44 und/oder die Abweisleiste 52 befestigt sein.

Um nacheinander Lose von Glasbehältern 8 unterschiedlicher Länge zu bearbeiten, kann wenigstens ein Förderer 1 gegenüber dem anderen Förderer horizontal verschieblich sein, wie durch den Doppelpfeil 58 angedeutet ist. Durch eine solche Verschiebung verringert sich die Breite der Lücke 4 in Längsrichtung 14 der Glasbehälter bzw. quer zum Förderriemen 18. Dadurch lässt sich die Glasbearbeitungslinie 2 zum Transport und/oder zur Bearbeitung und/oder zur Vermessung unterschiedlicher Glasartikel umrüsten.

Alternativ oder zusätzlich kann wenigstens ein Förderer 1 gegenüber dem anderen Förderer 1 vertikal verschieblich sein, wie durch den Doppelpfeil 59 angedeutet ist. Dadurch können bei der Umrüstung auf verschiedene Glasbehälter 8 beispielsweise unterschiedliche Halsdurchmesser und/oder unterschiedliche Außendurchmesser der Glasbehälter 8 ausgeglichen werden.

In der in Fig. 1 dargestellten Ausgestaltung stützt sich ein Glasbehälter 8 auf den Behälterstützen 28 der sich bezüglich dem Spalt 4 gegenüberliegenden Förderer 1 ab. Die Glasbehälter 8 erstrecken sich also quer zur Transportrichtung 20 über den Spalt 4. Die Behälterstützen 32 liegen sich dabei bezüglich des Spaltes 4 gegenüber.

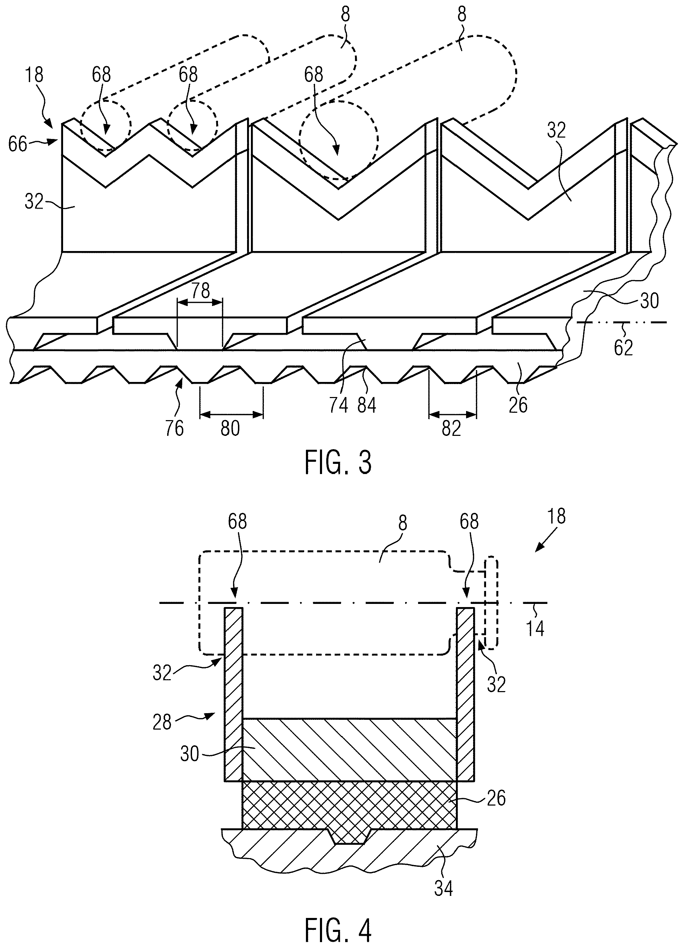

Bei Glasbearbeitungslinien 2, bei denen sich die Einrichtungen 6 ausschließlich oberhalb des Förderriemens 18 befinden, müssen keine zwei Förderer 1 vorgesehen sein. Bei solchen Glasbearbeitungslinien 2 ist es ausreichend, wenn zwei Behältersitze 32 sich gegenüberliegend an einem Treibriemen 26 angebracht sind. Eine solche Variante ist in Fig. 4 dargestellt.

Bei der Variante der Fig. 4 ist an beiden Seiten der Basis 30 jeweils ein Behältersitz 32 vorgesehen. Es ist also an der anderen Seite der Basis 30 ein weiterer Behältersitz 32 vorhanden. Ansonsten entspricht der Aufbau der Variante der Fig. 4 dem Aufbau des Förderriemens 18, wie er in Fig. 1 dargestellt ist. Auch bei dieser Variante erstreckt sich die Längsachse 14 eines Glasbehälters 8 quer zur Transportrichtung.

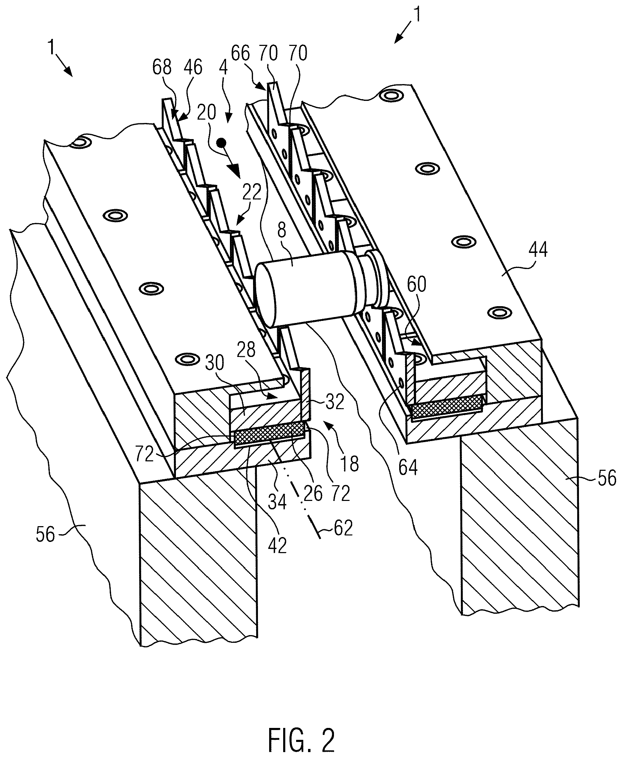

Fig. 2 zeigt ein Paar von Förderern 1, bei denen der Förderriemen 18 eingehaust verläuft. Die Einhausung des Förderriemens 18 erfolgt durch die Abschirmleiste 44 und die Stützschiene 34. Die Behälterstützen 28 bzw. zumindest deren Behältersitze 32 ragen durch eine Lücke 60 aus dieser Einhausung und bilden eine bewegliche Wand, die die Lücke 60 zwischen der Abschirmleiste 44 und der Stützschiene 34 abdeckt.

Die Behälterstützen 28 sind in der Ausgestaltung der Fig. 2 in einer Projektion entlang der Förderrichtung 20 L-förmig, wobei ein horizontaler Schenkel von der Basis 30 und ein vertikaler Schenkel vom Behältersitz 32 gebildet ist. Die Förderrichtung 20 verläuft parallel zur Längsrichtung 62 des Förderriemens 18.

Der Behältersitz 32 kann ein separates Teil sein, das an der Basis 30 bevorzugt wiederholt lösbar befestigt ist, beispielsweise durch eine Verschraubung 64.

Die Behältersitze 32 eines Förderriemens 18 können von senkrecht stehenden Laschen gebildet sein, die aus einem Flachmaterial, wie beispielsweise einem Blech oder einem Kunststoff gefertigt sind. Die Ebenen dieser Laschen liegen parallel zur Längsrichtung 62. Die Behältersitze 32 beider Förderriemen 18 sind parallel zueinander. Sind die Behältersitze aus einem Kunststoff gefertigt, so ist dieser bevorzugt wärmestabil, indem er eine Schmelztemperatur von mehr als 280 °C aufweist.

Die Behälterstützen, insbesondere die Behältersitze 32 des Förderriemens 18 sind in Längsrichtung 62 fluchtend hintereinander, bevorzugt einreihig angeordnet. Bei einer solchen Ausgestaltung ist also am Förderriemen 18 quer zur Längsrichtung 62 jeweils nur ein Behältersitz 32 vorhanden.

An dem zumindest im Arbeitstrum 22 oberen Ende 46 einer Behälterstütze 28 bzw. der Behälterstützen 28 befindet sich wenigstens eine Behälterauflage 68 in Form einer Ausnehmung, die den Glasbehälter 8 aufnimmt und wenigstens in Längsrichtung 62 sichert. Die Behälterauflage 68 ist beispielsweise V-förmig, wobei sich die V-Form insbesondere in einer Projektion quer zur Längsrichtung 62 ergibt. Die Behälterauflage 68 weist zwei Sitzflächen 70 auf, die jeweils in und entgegen die Förderrichtung 20 weisen und gegenüber der Förderrichtung 20 und der Vertikalen geneigt sind. Die Sitzflächen 70 müssen nicht, wie in Fig. 2 lediglich zu Beispielzwecken gezeigt, geradlinig sein, sondern können auch gekrümmt verlaufen. Auf den Sitzflächen 70 liegt der Glasbehälter 8, insbesondere dessen Umfangsfläche 33 während seines Transports auf.

Wie in Fig. 2 ferner zu erkennen ist, kann sich der Behältersitz 32 bis zu einer Seitenfläche 72 des Treibriemens 26 erstrecken. Die Seitenfläche 72 verläuft dabei insbesondere parallel zur Längsrichtung 62. Die Behälterstütze 28 kann seitlich, also in Richtung quer zur Längsrichtung 62, den Treibriemen 26 überragen. Die Basis 30 kann auf der gegenüberliegenden Seitenfläche 72 des Treibriemens 26 den Treibriemen 26 ebenfalls überragen. Wie ferner zu erkennen ist, springt der Behältersitz 32 in vertikaler Richtung von der Basis 30 vor.

Gemäß dem Ausführungsbeispiel der Fig. 3 kann die Behälterauflage 68 eines Behältersitzes 32 ein separates Teil sein, das insbesondere wiederholt austauschbar befestigt, beispielsweise verschraubt ist. Dies macht dann Sinn, wenn die Behälterauflage 68 aus einem wärmestabilen Kunststoff gefertigt ist, dessen Kosten größer sind als die des übrigen Behältersitzes 32.

Unabhängig von der Ausgestaltung des Behältersitzes 32 kann die Basis 30 mit einem Sockel 74 versehen sein, der von der Basis 30 zum Treibriemen 26 vorspringt und in Längsrichtung 62 des Treibriemens 26 eine geringere Breite aufweist als die Basis 30. Wird, wie in Fig. 3 dargestellt, ein Zahnriemen 26 mit einer Verzahnung 76 verwendet, so ist eine Breite 78 des Sockels 74 in Längsrichtung 62 bevorzugt höchstens so groß wie die Teilung 80 der Verzahnung 76. Insbesondere ist die Breite 78 so groß wie die Hälfte der Teilung 80 bzw. wie eine Breite 82 eines Zahnfußes 84.

Durch den Sockel 74 ist der Rest der Basis 30 vom Treibriemen 26 etwas beabstandet, so dass der Treibriemen 26 durch beispielsweise Rollen, Räder oder Gleitschuhe umgelenkt werden kann.

In Richtung quer zur Längsrichtung 62 kann der Sockel 74 durchgängig oder unterbrochen sein.

Der Sockel 74 einer Basis 30 muss nicht mittig an der Basis 30 angeordnet sein. Er kann auch seitlich an der Basis 30 ausgebildet oder angebracht sein. Letzteres kann sinnvoll sein, falls die Teilung der Behältersitze 32 oder Behälterauflagen 68 nicht mit der Teilung 80 übereinstimmt.

Schließlich ist in Fig. 3 noch gezeigt, dass eine Behälterstütze 28 auch mehrere Glasbehälter 8 abstützen kann, indem beispielsweise mehrere V-förmige Behälterauflagen 68 vorhanden sind. In einem solchen Fall ist die Mehrzahl von Behälterauflagen 68 von einem Behältersitz 32 gebildet. Sind die Behälterauflagen 68 von einem Kunststoff gebildet, so formt dieser bevorzugt monolithisch sämtliche Behälterauflagen 68 eines Behältersitzes 32.

### Bezugszeichen

- 1: Förderer
- 2: Glasbearbeitungslinie
- 4: Spalt
- 6: Einrichtung zur Bearbeitung und/oder Vermessung eines Glasbehälters
- 8: Glasbehälter
- 10: Durchmesser des Glasbehälters
- 12: Länge des Glasbehälters
- 14: Längsachse des Glasbehälters
- 16: Bodenfläche des Glasbehälters
- 18: Förderriemen
- 20: Transportrichtung
- 22: Arbeitstrum
- 24: Leertrum
- 26: Treibriemen
- 28: Behälterstütze
- 30: Basis
- 32: Behältersitz
- 33: Umfangsfläche
- 34: Stützschiene
- 36: Formschlusselement
- 38: Vorsprung
- 40: Nut
- 42: Mulde in der Stützschiene
- 44: Abschirmleiste
- 46: oberes Ende der Behälterstütze
- 48: Ausrichtleiste
- 50: Ende der Ausrichtleiste
- 52: Abweisleiste
- 54: Abweisfläche
- 56: Maschinengestell
- 58: Doppelpfeil horizontale Verstellung
- 59: Doppelpfeil vertikale Verstellung
- 60: Lücke
- 62: Längsrichtung des Treibriemens bzw. Förderriemens
- 64: Verschraubung zwischen Behälterstütze und Behältersitz
- 68: Behälterauflage
- 70: Sitzfläche
- 72: Seitenfläche des Treibriemens
- 74: Sockel
- 76: Verzahnung
- 78: Breite des Sockels
- 80: Teilung der Verzahnung
- 82: Breite eines Zahnfußes
- 84: Zahnfuß

## Patentansprüche

1. Förderriemen (18) zum Liegendtransport von Glasbehältern (8), insbesondere von Injektionsfläschchen, Spritzen, Karpulen, Ampullen oder Phiolen, mit einem Treibriemen (26) und mit Behälterstützen (28) zur Abstützung der Glasbehälter (8), wobei die Behälterstützen (28) am Treibriemen (26) befestigt sind.

2. Förderriemen (18) nach Anspruch 1, wobei die Behälterstützen (28) jeweils eine Basis (30) aufweisen, die starrer als der Treibriemen (26) ist, sich quer über den Treibriemen (26) erstreckt und auf dem Treibriemen (26) aufliegt, wobei sich von der Basis (30) weg nach oben ein Behältersitz (32) erstreckt, der an seinem oberen Ende (66) mit schräg gegenüber der Vertikalen ausgerichteten, zum Treibriemen (26) hin aufeinander zu verlaufenden Sitzflächen (70) versehen ist.

3. Förderriemen (18) nach Anspruch 2, wobei der Behältersitz (32) wiederholt lösbar an der Basis (30) befestigt ist.

4. Förderriemen (18) nach Anspruch 2 oder 3, **dadurch gekennzeichnet, dass** der Behältersitz (32) an seinem vom Förderriemen (18) weg weisenden Ende (66) mit einer Behälterauflage (68) aus Kunststoff versehen ist.

5. Förderriemen (18) nach einem der Ansprüche 1 bis 4, wobei die Basis (30) mit dem Treibriemen (26) wiederholt lösbar verbunden ist.

6. Förderriemen (18) nach einem der Ansprüche 1 bis 5, wobei die Behälterstützen (28) jeweils einen Sockel (74) aufweisen, der auf dem Treibriemen (26) aufliegt und in Längsrichtung (62) des Treibriemens (26) weniger breit ist als die Basis (30).

7. Förderriemen (18) nach Anspruch 6, wobei der Treibriemen (26) eine Verzahnung (76) auf der den Behälterstützen (32) gegenüberliegenden Seite aufweist und wobei die Breite (78) des Sockels (74) höchstens einer Breite (82) eines Zahnfußes (84) der Verzahnung (76) entspricht.

8. Förderriemen (18) nach Anspruch 7, wobei der Sockel (74) mit einem Zahnfuß (84) fluchtet.

9. Förderriemen (18) nach einem der Ansprüche 6 bis 8, wobei sich der Sockel (74) unterbrochen oder ununterbrochen quer über die gesamte Breite des Treibriemens (26) erstreckt.

10. Förderer (1) mit wenigstens einem Förderriemen (18) nach einem der Ansprüche 1 bis 9, wobei der Förderriemen (18) ein Arbeitstrum (22) und der Förderer (1) eine Stützschiene (34) aufweist und wobei das Arbeitstrum (22) auf der Stützschiene (34) gleitend abgestützt ist.

11. Förderer (1) nach Anspruch 10, wobei der Förderriemen (18) und die Stützschienen (34) mit zueinander komplementären Formschlusselementen (36, 38, 40, 42) versehen sind, durch die eine Bewegung des Förderriemens (18) quer zu seiner Längsrichtung (62) blockiert und der Förderriemen (18) in seiner Längsrichtung (62) gleitend geführt ist.

12. Förderer (1) nach Anspruch 10 oder 11, wobei der Förderer (1) eine Abschirmleiste (44) aufweist, die oberhalb des Arbeitstrums (22) angeordnet ist und das Arbeitstrum (22) wenigstens abschnittsweise abdeckt.

13. Förderer (1) nach einem der Ansprüche 10 bis 12, wobei der Förderer (1) eine Ausrichtleiste (48) aufweist, die entlang des Arbeitstrums (22) seitlich neben einem oberen Ende (60) der Behälterstützen (28) verläuft.

14. Förderer (1) nach einem der Ansprüche 10 bis 13, wobei der Förderer (1) eine Abweisleiste (52) aufweist, die oberhalb eines Leertrums (24) des Förderriemens (18) angeordnet ist.

15. Glasbearbeitungslinie (2) zum Transport, zur Bearbeitung und/oder Vermessung von Glasbehältern (8), insbesondere Injektionsfläschchen, Spritzen, Karpulen, Ampullen oder Phiolen, wobei die Glasbearbeitungslinie (2) zwei Förderriemen (18) nach einem der Ansprüche 1 bis 9 oder zwei Förderer (1) nach einem der Ansprüche 10 bis 14 aufweist, wobei die Förderriemen (18) parallel und beabstandet voneinander angeordnet und ausgestaltet sind, einen Glasbehälter (8) auf einer Behälterstütze (28) des einen Förderriemens (18) und auf einer quer zur Längsrichtung (62) der Förderriemen (18) gegenüberliegenden Behälterstütze (28) des anderen Förderriemens (18) aufliegend zu transportieren.
